(19) **Europäisches Patentamt**

**European Patent Office**

**Office européen des brevets**

(11) **EP 1 669 329 A2**

(12) **EUROPEAN PATENT APPLICATION**

(43) Date of publication:
**14.06.2006 Bulletin 2006/24**

(51) Int Cl.:
***C03B 37/018*** *(2006.01)* ***C03B 23/055*** *(2006.01)*

(21) Application number: **05026594.1**

(22) Date of filing: **06.12.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **07.12.2004 JP 2004354137**

(71) Applicant: **Sumitomo Electric Industries, Ltd.
Osaka-shi, Osaka 541-0041 (JP)**

(72) Inventors:
• **Hirano, Masaaki c/o Yokohama Works
Yokohama-shi
Kanagawa (JP)**
• **Nakanishi, Tetsuya c/o Yokohama Works
Yokohama-shi
Kanagawa (JP)**

(74) Representative: **HOFFMANN EITLE
Patent- und Rechtsanwälte
Arabellastrasse 4
81925 München (DE)**

(54) **Method of manufacturing an optical fiber preform**

(57) A method of manufacturing an optical fiber preform is provided, with which an increase of PMD and transmission loss of an optical fiber can be restrained. The method of manufacturing an optical fiber preform includes a process of heating a glass pipe and comprises the steps of (1) supporting the glass pipe at both ends thereof such that the longitudinal axis of the glass pipe becomes substantially horizontal and (2) heating the glass pipe with a heat source, wherein the bending moment at the supporting end of the glass pipe which is treated as a cantilever is 6 Nm or more, and the displacement of the heated region of the glass pipe in the heating process is equal to or less than 1.5 mm.

**EP 1 669 329 A2**

**Description**

BACKGROUND OF THE INVENTION

Field of the Invention

The present invention relates to a method of manufacturing an optical fiber preform from which an optical fiber having improved characteristics with respect to Polarization Mode Dispersion (PMD) and transmission loss can be produced.

Description of the Background Art

An modified chemical vapor deposition (MCVD) method is one of well known methods for making optical fiber preforms, in which a glass body is formed on the inner wall of a silica glass pipe by introducing a raw material gas into the pipe and heating the pipe from its outside. The heat sources used for the MCVD method are, for example, an oxyhydrogen flame burner, a thermal plasma burner, an induction furnace, a resistance furnace, $CO_2$ laser, etc. For manufacturing a large-sized fiber preform by the MCVD method, it is necessary to increase the diameter and length of a glass pipe for a starting member. Accordingly, the bending moment applied to the glass pipe, especially near the supporting end of the glass pipe, in a case where the glass pipe is assumed to be a cantilever increases.

The method of manufacturing an optical fiber preform includes a number of processes, in which the outer surface of the pipe is heated to a high temperature of 1600°C - 2300°C, including not only the step of forming a glass body by the MCVD method, but also the steps of vapor-phase thermal etching, shrinking the diameter of the glass pipe, and collapsing the glass pipe into a solid cylinder (including rod in collapse where the glass pipe and another rod are unified), In some cases of such heating process, a glass pipe tends to be deformed. Particularly, in the case of forming a glass body by the MCVD method, the deformation of the pipe increases because the glass pipe is heated aeveral to hundreds times since the glass body is formed layer by layer. If the deposition rate in the MCVD method is increased, the pipe tends to be deformed more significantly because it is necessary to heat the glass pipe to higher temperature because of the increase in the thickness of each formed glass soot layer to be vitrified into each glass body layer.

If a glass pipe is deformed, the glass body formed on the inner surface of the pipe is also deformed. Thus, in the case where the glass body becomes a core region, the core region is deformed. Also, in a case where a glass rod which is to become a core region is prepared separately and is inserted into and unified with the glass pipe after a glass body has been formed on the inner surface of the glass pipe, the core region composed of the glass rod is deformed by the influence of the deformed pipe. The deformation of the core region causes an increase of transmission loss and PMD when a fiber is produced from a preform made of the glass pipe, and accordingly the quality of the fiber is degraded.

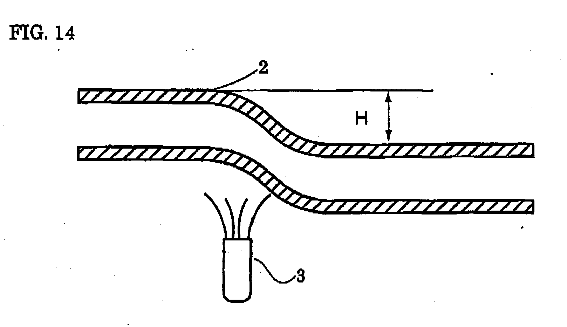

Figure 14 is a schematic diagram for explaining the deformation that occurs at the heated portion of a glass pipe. When a glass pipe 2 is heated by a heat source 3, the heated portion is softened and thereby a relative displacement occurs on both sides of the heated portion of the glass pipe. In this specification, the relative displacement is expressed by the sign "H". Japanese Patent Application Laid-Open No. 63-182229 discloses a method for suppressing the deformation of a glass pipe. In the disclosed method, a glass body is formed while a glass pipe is supported by a supporting body such as a roller, but there is no disclosure nor clarification about the relationship between the characteristics of an optical fiber and the displacement H.

SUMMARY OF THE INVENTION

An object of the present invention is to provide a method of manufacturing an optical fiber preform, with which an increase of PMD and transmission loss of an optical fiber can be restrained.

To achieve the object, the method of manufacturing an optical fiber preform includes a process of heating a glass pipe, comprising the steps of: (1) supporting the glass pipe at both ends thereof such that the longitudinal axis of the glass pipe becomes substantially horizontal; (2) the glass pipe is heated with a heat source, in which method the bending moment at the supporting end of the glass pipe which is regarded as a cantilever is 6 Nm or more, and the displacement of the heated region of the glass pipe in the heating process is equal to or less than 1.5 mm.

The ellipticity of the outer periphery of the glass pipe upon the end of heating process may be equal to or less than 0.5 %. An example of the heating process may be a process of forming a glass body on the inner surface of the glass pipe, and in this case, the glass body may be formed such that 1 m of the glass pipe can be processed into an optical fiber having a length equal to or more than 300 km. In the heating process, the glass pipe may be supported by an auxiliary supporting means at a part in addition to both end portions of the glass pipe, and it may be supported through an supporting pipe having bending rigidity greater than the glass pipe. The length of the region where the glass pipe is heated in the heating process may be 1.2 m or longer. In the heating process, at least a part of the region where the glass pipe is heated may have a wall thickness of 1 - 7 mm.

BRIEF DESCRIPTION OF THE DRAWING

These and other features, aspects, and advantages of the present invention will become better understood with regard to the following description, appended claims, and accompanying drawings where:

Figure 1 is a graph showing an example of the relationship between displacements H in the heated portion of a glass pipe and the ellipticity of the glass pipe after the end of heating in Experiment example 1;

Figure 2 is a graph showing an example of the relationship between displacements H in the heated portion of a glass pipe and the ellipticity of the glass pipe upon heating in Experiment example 2;

Figure 3 is a graph showing the relationship between fiber equivalent length per 1 m of a glass pipe and the ellipticity of the glass pipe upon heating in Experiment example 7;

Figure 4 is a graph showing the relationship between fiber equivalent length per 1 m of a glass pipe and the ellipticity of the glass pipe upon heating in Experiment example 8;

Figure 6 is a graph showing the relationship between fiber equivalent length per 1 m of a glass pipe and the ellipticity of the glass pipe upon heating in Experiment example 9;

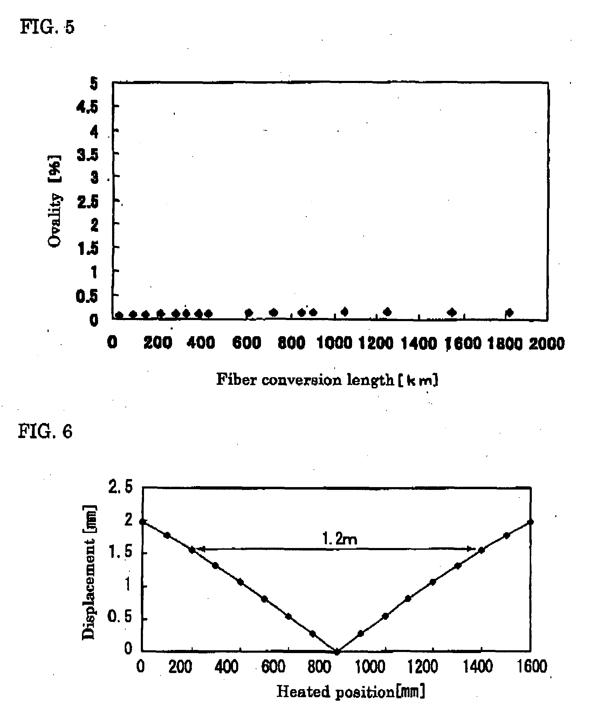

Figure 6 is a graph showing the relationship between heated positions and displacement on the glass pipe in Experiment example 3;

Figures 7A · 7G are schematic diagrams showing embodiments of auxiliary supporting means according to the present invention;

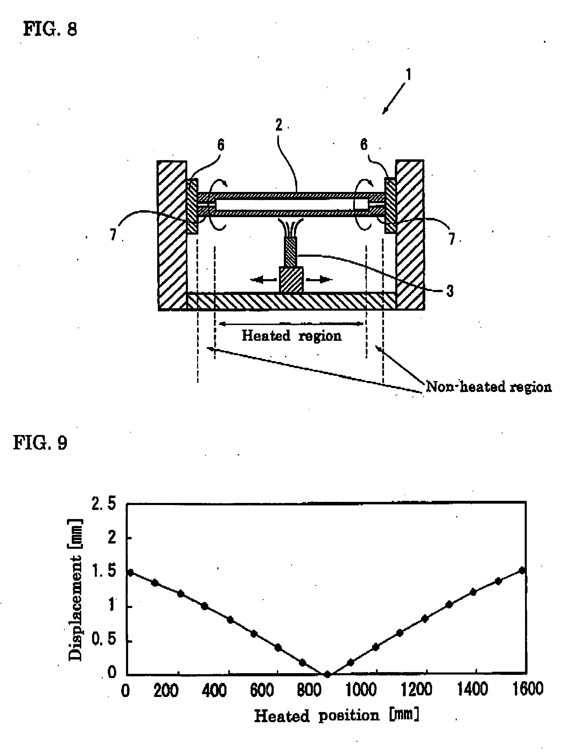

Figure 8 is a schematic diagram showing a process of heating a glass pipe supported through a supporting pipe;

Figure 9 is a graph showing the relationship between heated positions and displacement on the glass pipe in Experiment example 4;

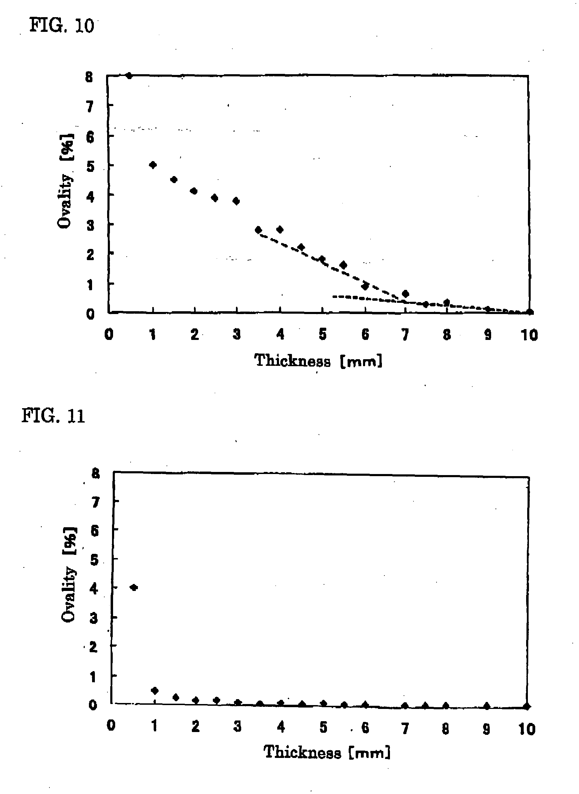

Figure 10 is a graph showing the relationship between the thickness of a glass pipe and the ellipticity of the glass pipe upon heating in Experiment example 5;

Figure 11 is a graph showing the relationship between the thickness of a glass pipe and the ellipticity of the glass pipe upon heating in Experiment example 6;

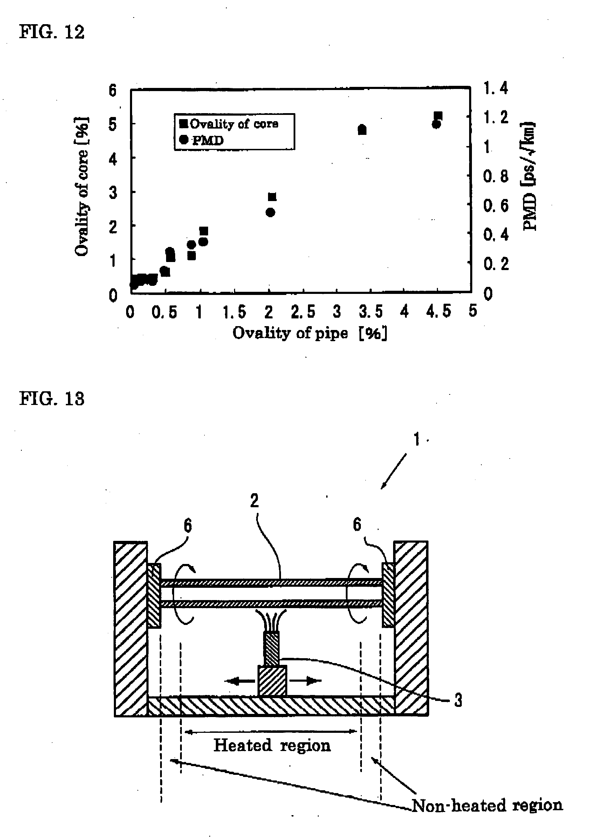

Figure 12 is a graph showing the relationship between the ellipticity of a glass pipe and the ellipticity of the core region of an optical fiber preform as well as the relationship between the ellipticity of the glass pipe and the PMD of an optical fiber;

Figure 13 is a schematic diagram showing a process of heating a glass pipe;

Figure 14 is a schematic diagram illustrating a deformation caused at the heated portion of a glass pipe; and

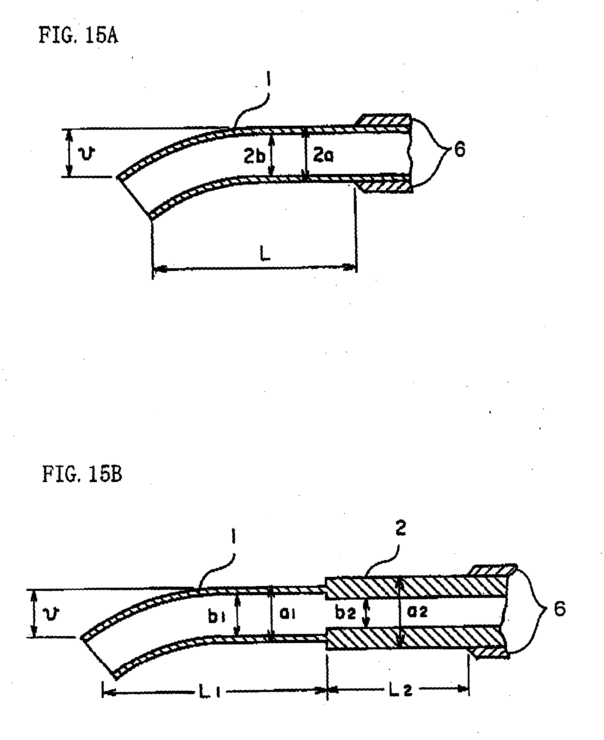

Figures 15A and 15B are schematic diagrams illustrating bending at the cantilever free end: Fig. 15A shows a case where the cross-section of the beam is uniform, and Fig. 15B shows a case where the cross-section of the beam is not uniform.

DETAILED DESCRIPTION OF THE INVENTION

As a result of observation made by the present inventors in detail with regard to the process of heating glass pipes, it was found that (1) the relative displacement H of a glass pipe on both sides of the heated portion cannot be ignored when the glass pipe is heated to a temperature equal to or more than 1600°C, and (2) the displacement H increased near the ends of the glass pipe and the deformation of the pipe upon heating also increased at the ends of the pipe. It was assumed that the displacement H was caused because the bending due to self-weight of the glass pipe differed between the sides of the heated portion of the glass pipe when the heated portion was softened to cause the glass pipe to be in a cantilever-like state on the respective sides of the heated portion. Also, it was assumed that the crass-section of the pipe became an elliptical or polygon form as a result of the relative displacement during heating.

Figures 15A and 15B are schematic diagrams illustrating bending at the free end of the cantilever, and Fig. 15 A shows a case where the cross-section of the beam is uniform. In the case where a glass pipe 1 having an outer diameter 2a, inner diameter 2b, length L, density p ($2.2 \times 10^8$ kg/m$^8$ in the case of silica glass), and Young's modulus E ($7.3 \times 10^{10}$ in the case of silica glass) is treated as a cantilever whose one end is held with a chuck 6, the weight w per unit length, second moment of area I, bending moment M applied to a holding part, and the bending displacement v at the free end of the cantilever are represented as follows:

$$\mathbf{w} = \rho \times \pi (a^2 \cdot b^2) \times g,$$

$$\mathbf{I} = (\pi/4) \times (a^4 \cdot b^4),$$

$$\mathbf{M} = \mathbf{wL}^2/2,$$

$$\mathbf{v} = \mathbf{ML}^2/4\mathbf{EI} = \mathbf{M}^2/2\mathbf{wEI}$$

where, g is about 9.8 N/kg by acceleration of gravity. Hereinafter in this specification, the bending moment M applied to the holding part of the cantilever is called merely as "bending moment".

Bending displacement v increases proportionally according to the square of the bending moment M. For example, in the case of a silica glass having 2a = 42 mm and 2b = 88 mm, when the bending moments M are 8 Nm, 7 Nm, and 6 Nm, the bending displacement v becomes 1.5 mm, 1.2 mm, and 1 mm, respectively. When a glass pipe having a bending moment of 6 Nm or more is heated, the relative displacement of the pipe on both sides of the heated portion can become equal to or more than 1 mm, and the possibility of deformation of a pipe caused by heating is increased. Therefore, it becomes difficult to keep the true circularity of a pipe while heating the pipe. The difficulty increases in the case of 7 Nm, and further more increases in the case of 8 Nm or more. Therefore, when a glass pipe having a large bending moment M is heated without any preventive measures, the pipe easily deforms upon heating.

Figure 16B shows the case where the cross-section of the beam is not uniform. In the case where the cross-section of the beam changes, the bending moment M is expressed by:

$$M = \int_0^L w_x x \, dx$$

where $w_x$ is a load at a distance X from the free end. For example, when a glass pipe 1 having an outer diameter $a_1$, an inner diameter $b_1$, and a length $L_1$ and a glass pipe 2 having an outer diameter $a_2$, an inner diameter $b_2$, and a length $L_2$ are joined together and the glass pipe 2 was held with a chuck 6, the bending moment M is expressed by:

$$M = \int^{l_1} w_1 X \, dx + \int_{l_1}^{l_1+l_2} w_2 X \, dx$$
$$= \frac{1}{2} w_1 L_1^2 + w_2 L_1 L_2 + \frac{1}{2} w_2 L_2^2$$

(where, $w_1 = \rho \times \pi \times (a_1^2 - b_1^2) \times g$, $w_2 = \rho \times \pi \times (a_2^2 - b_2^2) \times g$).

It is necessary to use a long glass pipe in order to increase productivity. However, the bending moment increases as the length of the pipe increases. The length of a supporting pipe must be considered in addition to the length of the heated region of the glass pipe. When the whole length becomes long, the bending moment increases, and the displacement H further increases. As a result, the glass pipe tends to be easily deformed.

(Experiment example 1)

A glass pipe made of silica glass including chlorine of 0.2 wt.% and having an outer diameter of 42 mmφ, inner diameter of 32 mmφ, and length of 1500 mm (bending moment 14 Nm) was fixed to a lathe by both ends of the pipe being held with a chuck. While the maximum temperature of the outer surface of the glass pipe was heated to 2100 °C with an oxyhydrogen burner, the burner was subjected to reciprocating movement along the longitudinal axis of the pipe and such reciprocating movement was repeated five times.

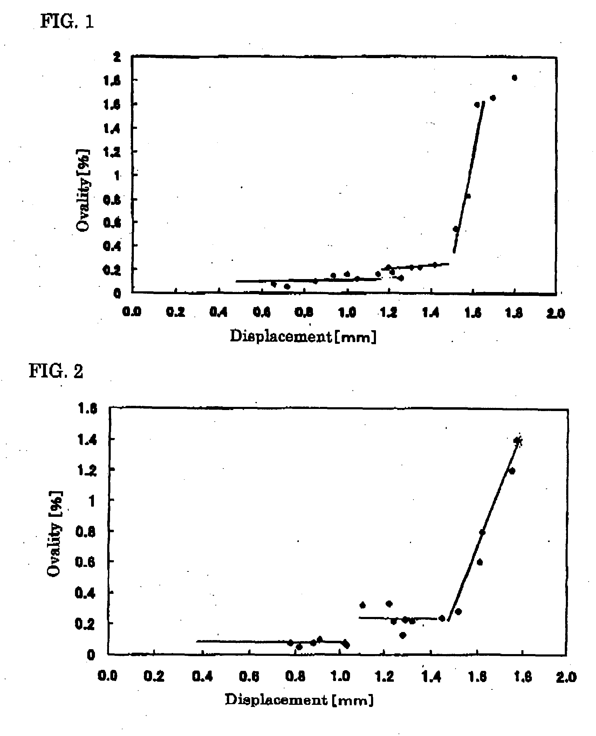

Figure 1 is a graph showing the relationship between the displacement H in the heated portion of a glass pipe and the ellipticity of the glass pipe upon the end of heating in Experiment example 1. The ellipticity of the ordinate is a numerical value which can be defined by: an ellipticity (%) = {($R_{max}$-$R_{min}$) /$R_{ave}$}×100 (%), where $R_{max}$ is the maximum diameter of the cross-section of a glass pipe 2, $R_{min}$ is the minimum diameter thereof, and $R_{ave}$ is the average diameter thereof.

When the displacement H becomes larger than about 1.6 mm, the ellipticity increases steeply. That is, the ellipticity due to deformation of the glass pipe can be restrained if the displacement H is controlled to 1.5 mm or less, and more preferably 1.2 mm or less.

(Experiment example 2)

A glass pipe made of silica glass including chlorine of 0.2 wt% and having an outer diameter of 42 mmφ, inner diameter of 36 mmφ, and length of 2000 mm (bending moment: 16 Nm) was fixed to a lathe by both ends of the pipe being held with a chuck. While the maximum temperature of the outer surface of the glass pipe was heated with an oxyhydrogen burner to 1900 °C, the burner was subjected to reciprocal movement along the longitudinal axis of the pipe and the reciprocal movement was repeated five times. Figure 2 is a graph showing the relationship between the displacement H in the heated portion of the glass pipe and the ellipticity of the glass pipe upon heating in Experiment example 2. In Experiment example 2, the wall thickness of the glass pipe was thinner than in Experiment example 1, but the heating temperature was lower and accordingly the viscosity of the pipe 2 during heating was higher than in Experiment example 1. In Experiment example 2, the increase of the ellipticity also occurred at the region where the displacement was greater than with 1.5 mm as in Experiment example 1. When the displacement is equal to or less than 1 mm, the ellipticity of the glass pipe can be maintained almost the same as before heating.

As shown in Experiment examples 1 and 2, by controlling the displacement H in the heated portion of the glass pipe to 1.5 mm or less, the deformation of the glass pipe upon the end of heating process can be restrained to ellipticity of 0.5 % or less, which is negligible for practical use. As a result, it is possible to manufacture an optical fiber which does not have increased polarization mode dispersion and transmission loss, The displacement is larger at the end portions of the glass pipe. When a deformation occurs at an end portion, the central portion of the glass pipe is also deformed in a manner in which the deformation works as a starting point of such transformation. In order to prevent such occurrence, it is necessary to heat a glass pipe in a manner in which the displacement H does not exceed 1.5 mm in the region where the pipe is heated including its end portion. Preferably, the displacement H should not exceed 1.2 mm, and more preferably it should not exceed 1 mm, so that the glass pipe may not be deformed.

(Experiment example 3)

A glass pipe 2 made of silica glass including chlorine of 0.2 wt% and having an outer diameter of 42 mm, inner diameter of 36 mm, and length of 2000 mm (bending moment: 16 Nm) was held by horizontal·type lathe 1. The 1600 mm part excluding 200 mm of both end portions of the glass pipe was heated with a heat source 3 to the maximum temperature of about 2200 °C while the heat source 3 was moved along the longitudinal axis of the glass pipe (Fig. 13).

Figure 6 is a graph showing the relationship between the displacement and the heated position of the glass pipe in Experiment example 3. The heated position of abscissa shows a distance from the left end in the heated range on the glass pipe in Fig. 13. The displacement H is almost zero at the center (800 mm position) of the glass pipe 2, increasing towards both ends thereof. The displacement H at a position which is 600 mm or more distanced from the center is equal to or more than 1.5 mm. This means that when the length of the glass pipe 2 is more than 1200 mm, the displacement at both end portions of the pipe is larger than 1.5 mm. Generally, it is difficult to heat a glass pipe having a length of 1.2 m or more in a manner such that the displacement H may not exceed 1.5 mm.

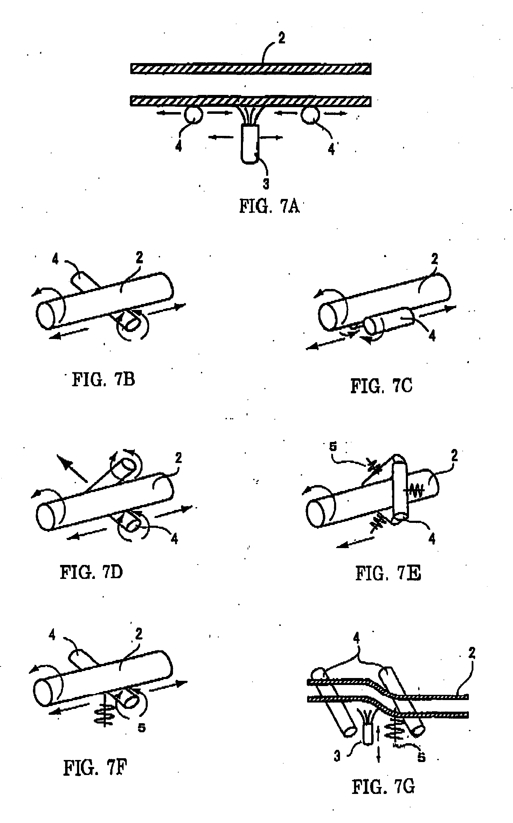

Preferably, the part other than both end portions of a glass pipe is also supported by an auxiliary support means during a heating process. Figures 7A - 7G are schematic diagrams showing embodiments of the auxiliary support means of the present invention. Figure 7A is an example in which the bending due to heating of a glass pipe 2 is restrained by supporting the glass pipe 2 with jigs 4 at positions back and forth of the moving direction of a heat source 3. Figure 7B is an example in which a glass pipe 2 is supported with a jig 4 which can turn in both directions at the vicinity of the heat source. Figure 7C is an example in which a glass pipe 2 is supported with two jigs 4 which can turn in parallel with the turn of the glass pipe 2.

Figure 7D is an example in which the displacement of the pipe 2 due to the friction between the pipe 2 and jigs 4 is prevented by supporting the glass pipe 2 in a V-shaped manner with the jigs 4 which can turn to both directions. Figure 7E is an example in which the glass pipe 2 is supported with jigs 4 from three directions, and Fig. 7F is an example in which the glass pipe 2 is supported from underside with a jig 4. In examples of Figs. 7E and 7F, each jig 4 is pushed by a spring 5 so that the glass pipe 2 may not bend.

In an example illustrated in Fig, 7G, an image processing means or a laser displacement detection meter (not illustrated in the figure) detects a displacement of the heated portion, which is caused by a heat source 3, and according to the displacement thus detected, an auxiliary supporting means (supporting jig 4) is moved in a vertical direction or the pressing force of a spring 5 is changed, so that the displacement of the glass pipe 2 may be controlled to 1.5 mm or less, preferably to 0. The jig 4 for supporting the glass pipe 2 may be made of high-purity silica glass, carbon, or boron nitride, for example, and may be a roller which can turn in a moving direction or turning direction of the glass pipe 2 as illustrated in Figs. 7B · 7G.

The jig 4 may be provided with a spring 5 as a cushion for absorbing a curve occurring in the glass pipe and a change in the outer diameter of the glass pipe as shown in Figs. 7E, 7 F, and 7G. The bending of the glass pipe 2 can be restrained by supporting the part other than both end portions of the glass pipe with an auxiliary support means during a heating process, and accordingly it is possible to control the displacement of the glass pipe to 1.5 mm or less in the heating process even if the heating region of the glass pipe is longer than 1200 mm.

A glass pipe 2 may be supported with an supporting pipe having higher bending rigidity than the glass pipe. Figure 8 is a schematic diagram showing a process for heating the glass pipe supported with the supporting pipe. In the embodiment of Fig. 8, the glass pipe 2 is supported with an supporting pipe (handling glass pipe 7) which is connected with at least one end of the glass pipe 2 and which has bending rigidity greater than the glass pipe 2. The size of bending is in inverse proportion to the bending rigidity which is defined as the product, $E \times L$, of Young's modulus E and second moment of area I. Therefore, by connecting a handling glass pipe having high bending rigidity with an end of the glass pipe, it is possible to restrain the bending of the glass pipe during heating. For increasing the bending rigidity, the outer diameter a may be increased and the inner diameter b may be decreased. In addition, a glass pipe made of a material having large Young's modulus E may be selected as a handling glass pipe 7.

(Experiment example 4)

A glass pipe 2 made of silica glass including chlorine of 0.2 wt% and having an outer diameter of 42 mm, inner diameter of 36 mm, and length of 1600 mm (bending moment: 10 Nm) was held with a horizontal-type lathe 1 as shown in Fig. 8 by connecting each end of the glass pipe 2 to a handling glass pipe 7 made of silica containing substantially no chlorine and having an outer diameter of 45 mmφ, inner diameter of 5 mmφ, and length of 200 mm. The glass pipe 2 was heated, excluding 200 mm (the part of the supporting pipe 7) at both ends thereof, to the maximum temperature of 2200°C with a heat source 8 which was moved in an axial direction.

Figure 9 is a graph showing the relationship between a displacement and a heated position of the glass pipe in Experiment example 4. The heated position of abscissa shows a distance from the left end of the heated region of the glass pipe 2 in Fig. 8. As can be seen from comparison between Fig. 6 and Fig. 9, in Experiment example 4, the total length of glass pipe (including the glass pipe 2 and the handling glass pipe), as well as the length of the heated region and the heating temperature, is the same as in Experiment example 3, the displacement during heating can be restrained to equal to or less than 1.5 mm over the whole length of the glass pipe by supporting the glass pipe 2 through an supporting pipe 7 even if the glass pipe is longer than 1200 mm.

Also, in the viewpoint of preventing the glass surface from being damaged and contaminated, the method in Experiment example 4 is advantageous as compared with a method in which an auxiliary support means (jig 4) is used for restraining the occurrence of bending. Moreover, in the method in which an auxiliary support means is used for preventing the bending, friction caused between the auxiliary support means and the glass pipe 2 may add undesirable stress to the heated and softened part of the glass pipe 2, thereby causing the glass pipe to curve. However, there is no such fear in the method in which the glass pipe is supported through the supporting pipe.

(Experiment examples 5 and 6)

The thinner the wall thickness of the heated glass pipe 2, the larger the deformation of the glass pipe 2 when the bending occurs during heating. A plurality of glass pipes made of silica glass including chlorine of 0.2 wt% and having an outer diameter of 42 mm in which the wall thickness differed from each other were each subjected to heating operation 20 times by moving a burner back and forth relative to each glass pipe while the surface of the respective glass pipe was heated with a heat source 3 to 2060 °C at the maximum temperature. In this case, the ellipticity of the glass pipe 2 at the part where the displacement of the glass pipe was about 2.0 mm was measured (Experiment example 5). Also, the same glass pipes 2 were heated in the same conditions as in Experiment example 5 except that the same glass pipes 2 were supported through supporting pipes 7, and the ellipticity of the glass pipes was measured at positions where the displacement of the glass pipes 2 was about 1.0 mm on average (Experiment example 6).

Figures 10 and 11 are graphs showing the relationship between the wall thickness of the glass pipes and the ellipticity upon heating in Experiment examples 5 and 6, respectively. Figure 10 shows that if the wall thickness of the glass pipe is about 7 mm or more, the ellipticity of the glass pipe 2 can be decreased to less than 0.5 % even when the displacement during heating is as large as about 2 mm. On the other hand, Fig. 11 shows that if the displacement during heating is suppressed to about 1 mm, the ellipticity of the glass pipe can be made small even when the wall thickness of the glass pipe falls in the range from 1 mm to 7 mm.

Thus, even if the wall thickness in the heated region of a glass pipe is partially 1 - 7 mm, the ellipticity upon heating can be kept equal to or less than 0.5 % by restraining the displacement H to 1.5 mm or less. Accordingly, a optical fiber preform having preferable characteristics can be manufactured even if a glass pipe having a wall thickness thinner than conventional glass pipes is used, When a glass pipe having a wall thickness of 7 mm or more is used, it is difficult to vitrify the glass soot formed by the MCVD method into transparent glass. Also, when a glass pipe has a wall thickness thinner than 1 mm, it is difficult to use the glass pipe for manufacturing an optical fiber preform by using the present available technology since the change in the outer diameter of the glass pipe upon heating increases or OH groups penetrate into the inside of the glass pipe.

The present invention can also be applied to a case where the heating process is a process in which a glass body is formed on the inner surface of a glass pipe (MCVD method). In this case, the glass body may be formed such that 1 m of the glass pipe may be calculated to be 300 km or more in terms of a fiber length.

(Experiment examples 7, 8, and 9)

Glass bodies were formed by the MCVD method inside glass pipes made of silica glass including chlorine of 0.2 wt% and having an outer diameter of 42 mmφ, inner diameter of 38 mmφ, and length of 1700 mm (bending moment: 8 Nm) such that the fiber equivalent length per 1 m of a pipe (the length of an optical fiber that can be manufactured from 1 m of a pipe) might be 50 - 1900 km. In Experiment examples 7, 8, and 9, glass bodies were formed under the conditions such that the displacement H of the glass pipes during heating (deposition of a glass body by the MCVD method) was 1.5 mm, 1.2 mm, and 0.8 mm, respectively, and the relationship between the fiber equivalent length and the average of the ellipticity upon heating of the glass pipes was examined.

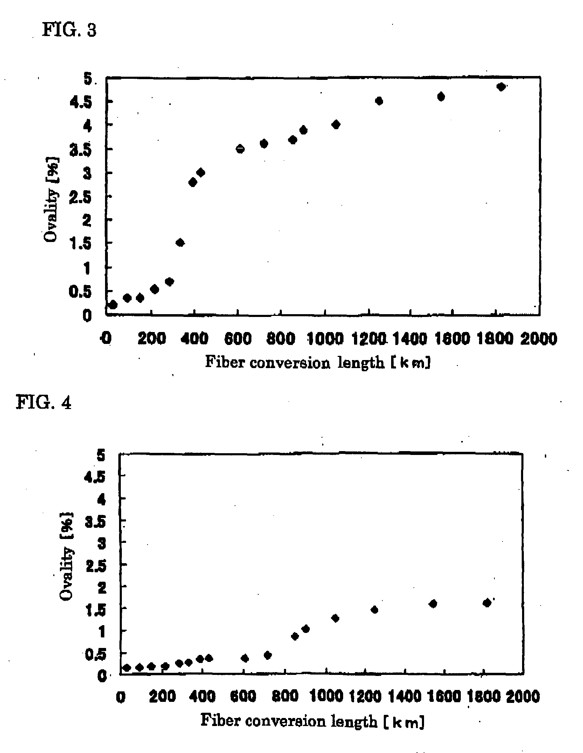

Figures 3, 4, and 5 are graphs showing the relationship between the ellipticity upon heating of a glass pipe and the fiber equivalent length per 1 m of the glass pipe in Experiment examples 7, 8, and 9, respectively. In Experiment example 7, when a glass body is formed in a fiber equivalent length exceeding 300 km, the ellipticity upon heating of the pipe becomes larger than 0.5 %. In Experiment example 8, when a glass body is formed in a fiber equivalent length exceeding 800 km, the ellipticity upon heating of the pipe becomes 0.5 % or larger. In Experiment example 9, substantially no increase in ellipticity upon heating of the pipe is recognized even when a glass body is formed in a volume of fiber equivalent length exceeding 1600 km. In the case where the displacement H of the glass pipe during heating was larger than 1.5 mm, it was confirmed that the ellipticity upon heating of the pipe exceeded 0.5 % even when a glass body was formed in a volume of fiber equivalent length less than 300 km.

Thus, in a case where a large volume of glass body is formed so as to increase a fiber equivalent length of a glass pipe, long heating is necessary, and preferably the displacement of the glass pipe should be made small accordingly by providing further preventive measures against occurrence of bending. More specifically, it is necessary to control the displacement H of the glass pipe to about 1.5 mm or less when a glass pipe having fiber equivalent length of 300 km per 1 m is manufactured. More preferably, the displacement H of the glass pipe should be 1.2 mm or less, and most preferably 0.8 mm or less.

(Example 1)

An supporting pipe 7 having a length of 150 mm is welded to each end of a glass pipe 2 made of silica glass including chlorine of 0.2 wt% and having an outer diameter of 42 mmφ, inner diameter of 36 mmφ, and length of 1400 mm (bending moment 8 Nm). The supporting pipe 7 is fixed to a lathe 1 as shown in Fig. 8. The outer surface of the glass pipe 2 is heated with a heat source 3 while a raw gaseous material is introduced inside the glass pipe 2 from one end of the glass pipe 2 so that silica glass which is to become a part of an optical cladding is formed on the inner surface of the glass pipe 2. Subsequently, $GeO_2$-containing $SiO_2$ glass, which is to become a core, is formed at a forming rate of 1.5 g/min. In this case, the maximum displacement of the glass pipe 2 is 1.2 mm, and the fiber equivalent length per 1 m length of the glass pipe 2 is 600 km, and the ellipticity of outer periphery of the glass pipe is 0.4 %.

Subsequently, the glass pipe 2 is heated and collapsed to make an optical fiber intermediate preform. The maximum ellipticity of the intermediate preform at the core region is 0.5 %. Moreover, a cladding region is synthesized on the outer surface of the intermediate preform to make an optical fiber preform, and a standard single mode fiber is produced by drawing the optical fiber preform having a ratio of 1/13 between the outer diameter of the core region and the outermost diameter of the optical fiber preform. The PMD value of the obtained optical fiber is 0.05 ps/√km in a transmission band.

(Comparative Example 1)

Silica glass and $SiO_2$ glass containing $GeO_2$ are formed in the same manner as in Example 1 except that a glass pipe 2 having a length of 1700 mm is used without using an supporting pipe 7. In this case, the displacement of the glass pipe 2 is the largest near both ends of the glass pipe, becoming smaller toward the center portion, and the ellipticity in the outer periphery of the glass pipe at the part where the displacement is about 1.7 mm becomes 4.1%.

Subsequently, the part where the displacement of the glass pipe 2 is about 1.7 mm is heated and collapsed so as to make an optical fiber intermediate preform. The maximum ellipticity of the core region of the intermediate preform is 5.2 %. Moreover, a cladding region is synthesized on outer surface of the intermediate preform to be an optical fiber preform, and a standard single mode fiber is produced by drawing the optical fiber preform having a ratio of 1/13 between the outer diameter of the core region and the outermost diameter of the optical fiber preform. The PMD value of the obtained optical fiber is 1.2 ps/√km.

(Example 2)

A plurality of glass pipes made of silica glass containing chlorine of 0.2 wt% and having an outer diameter of 42 mm, inner diameter of 36 mm, length of 1500 mm are prepared (banding moment: 9 N). Glass is formed by the MCVD method on the inner surface of each glass pipe under the conditions in which the displacement at the heated portion of the glass pipe is a value in the range of 0 - 2 mm. First, silica glass which is to become a part of the optical cladding is formed, and then the $GeO_2$-doped $SiO_2$ glass which is to become a core is formed. The relative refractive index $\Delta$ of $GeO_2$-doped $SiO_2$ glass is 0.35 % with respect to the refractive index of the starting glass pipe. Next, the ellipticity of the glass pipe upon formation of the glass is measured. As a result of forming the glass, the fiber equivalent length per 1 m length of the starting glass pipe becomes 2000 km.

Subsequently, the glass pipe 2 is heated and collapsed to make an optical fiber intermediate preform, and the ellipticity of the core region of the optical fiber preform is measured. Moreover, a cladding region is synthesized on the outer periphery of the intermediate preform to be an optical fiber preform, and then a standard single mode fiber is produced by drawing the optical fiber preform having a ratio of 1/13 between the outer diameter of the core region and the outermost diameter of the optical fiber preform. The PMD in the 1.56 $\mu$m band of the optical fiber is measured.

Figure 12 is a graph showing the relationship between the ellipticity of a glass pipe and the ellipticity of a core region of an optical fiber preform as well as the relationship between the ellipticity of the glass pipe and PMD of an optical fiber. In Fig. 12, the abscissa shows an ellipticity of the glass pipe, the left ordinate shows an ellipticity of a core region of the optical fiber preform, and the right ordinate shows PMD of the fiber. A symbol ■ shows the relationship between the ellipticity of outer diameter of the glass pipe and the ellipticity of the core region, and a symbol • shows the relationship between the ellipticity of the outer diameter of the glass pipe and PMD.

As shown in Fig. 12, if the ellipticity of a glass pipe is larger than 0.5 %, the ellipticity of the core region as well as the PMD value of a fiber increases. This tendency is the same in a method in which a glass rod is inserted inside a glass pipe and unified with the glass pipe by heating. It is possible to produce an optical fiber having a PMD value of 0.1 ps/√km or less and a low transmission loss by using an optical fiber preform prepared under the conditions in which the ellipticity of the glass pipe upon heating process is controlled to 0.5 % or less.

While this invention has been described in connection with what is presently considered to be the most practical and preferred embodiments, the invention is not limited to the disclosed embodiments, but on the contrary, is intended to cover various modifications and equivalent arrangements included within the spirit and scope of the appended claims.

The entire disclosure of Japanese Patent Application No. 2004-354137 filed on December 7, 2004, including specification, claims drawings and summary, is incorporated herein by reference in its entirety.

## Claims

1.  A method of manufacturing an optical fiber preform, including a process of heating a glass pipe, and comprising the steps of:

    (1) supporting the glass pipe at both ends thereof such that the longitudinal axis of the glass pipe becomes substantially horizontal;
    (2) heating the glass pipe with a heat source, wherein

    the bending moment at the supporting end of the glass pipe which is regarded as a cantilever is 6 Nm or more, and the displacement of the heated region of the glass pipe in the heating process is equal to or less than 1.5 mm.

2.  A method of manufacturing an optical fiber preform according to claim 1,
    wherein the ellipticity of the glass pipe upon the end of a heating process is equal to or less than 0.5 %.

3.  A method of manufacturing an optical fiber preform according to claim 1 or 2,
    wherein the heating process is a process for forming a glass body on the inner surface of the glass pipe.

4.  A method of manufacturing an optical fiber preform according to claim 3,
    wherein the glass body is formed in the heating process such that the fiber equivalent length per 1 m of the glass pipe is equal to or more than 300 km.

5.  A method of manufacturing an optical fiber preform according to any one of claims 1 to 4,
    wherein in the heating process, the glass pipe is supported by an auxiliary supporting means at a part in addition to both end portions of the glass pipe.

6.  A method of manufacturing an optical fiber preform according to any one of claims 1 to 4,
    wherein in the heating process, the glass pipe is supported through an supporting pipe having bending rigidity greater than the glass pipe.

7.  A method of manufacturing an optical fiber preform according to any one of claims 1 to 6,
    wherein the length of the region where the glass pipe is heated in the heating process may be 1.2 m or longer.

8.  A method of manufacturing an optical fiber preform according to any one of claims 1 to 7,
    wherein in the heating process, at least a part of the region where the glass pipe is heated has a wall thickness of 1 - 7 mm.

FIG. 1

FIG. 2

FIG. 3

FIG. 4

FIG. 5

FIG. 6

FIG. 7A

FIG. 7B

FIG. 7C

FIG. 7D

FIG. 7E

FIG. 7F

FIG. 7G

FIG. 8

Heated region

Non-heated region

FIG. 9

FIG. 10

FIG. 11

FIG. 12

FIG. 13

Heated region

Non-heated region

FIG. 14

FIG. 15A

FIG. 15B